# EUROPÄISCHE PATENTSCHRIFT

(11) **EP 0 791 507 B1**
(45) Veröffentlichungstag und Bekanntmachung des Hinweises auf die Patenterteilung: **09.01.2002**
(21) Anmeldenummer: 97102744.6
(22) Anmeldetag: 20.02.1997
(51) Int. Cl.: B60R 19/34

(54) **Vorrichtung zur Aufhängung eines Stossfängers an einem Fahrzeug**
Device for fixing a bumper to a vehicle
Dispositif de fixation d'un pare-choc sur un véhicule

(30) Priorität: 22.02.1996 DE 19606538
(43) Veröffentlichungstag der Anmeldung: 27.08.1997
(73) Patentinhaber: DYNAMIT NOBEL KUNSTSTOFF GmbH, 53840 Troisdorf (DE)
(72) Erfinder: Braun, Stefan, 91781 Weissenburg (DE); Kamm, Artur, 91757 Treuchtlingen (DE); Katheder, Gerhard, 91793 Trommetsheim (DE)

(56) Entgegenhaltungen:
- DE-A- 4 305 490
- DE-U- 29 509 430
- US-A- 4 995 660
- BARRETT J: "AL ENERGY ABSORBER CHALLENGES STEEL" EUREKA (INC. ENGINEERING MATERIALS AND DESIGN), Bd. 16, Nr. 1, 1. Januar 1996 (1996-01-01), Seite 26/27 XP000587379 ISSN: 0261-2097

## Beschreibung

Die Erfindung betrifft eine Vorrichtung zur Aufhängung eines Stoßfängers an einem Fahrzeug nach dem Oberbegriff des Anspruchs 1. Eine derartige Vorrichtung ist auch aus Dokument; 'Al energy absorber challenges steel', Eureka, Bd.16, Nr 1, 1. January 1996 bekannt Aus dem deutschen Gebrauchsmuster G 94 16 640 ist eine Vorrichtung zur Aufnahme eines Stoßfängers an einem Fahrzeug bekannt. Hierzu ist an einem Anschlußteil am Fahrzeug ein Stülprohr befestigt, welches aus einem inneren und einem äußeren Rohrteilbesteht. Bei entsprechender Krafteinwirkung auf den Stoßfänger schiebt sich das innere Rohrteil in das äußere Rohrteil, ohne daß die Karosserie selbst beschädigt wird. An der zum Stoßfänger gewandten Seite des inneren Rohrteils ist dieses mit einer Bohrung bzw. einem Befestigungsauge versehen, durch das der Stoßfänger, beispielsweise mittels Schrauben, am Stülprohr, bzw. dem inneren Rohrteil festsetzbar ist.

Nachteilig an dieser Vorrichtung ist, daß durch das Befestigungsauge der Querschnitt des inneren Rohrteils des Stülprohres verringert ist, wodurch es bei entsprechender Krafteinwirkung leicht zu Rissen und Verformungen im Bereich des Befestigungsauges kommen kann.

Der Erfindung liegt die Aufgabe zugrunde, eine Vorrichtung zur Aufhängung eines Stoßfängers an einem Fahrzeug nach dem Oberbegriff des Anspruchs 1 so zu gestalten, daß die Stabilität der Befestigung des inneren Rohrteils einerseits verbessert ist und andererseits geringe Querverschiebungen unter Krafteinwirkung möglich sind.

Erfindungsgemäß wird diese Aufgabe durch die Merkmale des kennzeichenteils des Anspruch 1 gelöst, Durch die Verwendung eines auf der Stirnseite des inneren Rohrteils aufliegenden Stützlagers, welches mit dem Querträger verschraubt ist, ist eine Befestigung ohne Schwächung des inneren Rohrteils erreicht. Die Verprägungen auf der Außenseite des Stützlagers ermöglichen im Belastungsfall ein Gleiten des Querträgers auf dem Stützlager. Dadurch wird die Federbewegung des Querträgers erleichtert und die Querkräfte auf das Stülprohr vermindert. Diese Verminderung der Querkräfte sichert wiederum die Funktion des Stülprohres.

Erfindungsgemäß ist das Stützlager vorteilhafterweise U-förmig geformt und weist in den Schenkeln Bohrungen oder Gewinde zur Verschraubung der Stützlager mit dem Querträger auf. Die Verschraubung ist dadurch im rechten Winkel zur Axialrichtung des Stülprohres angeordnet.

In vorteilhafter Ausgestaltung ist ferner im Stützlager ein in das Innere des inneren Rohrteils hineinreichendes Gewinde angeordnet, wobei der Querträger eine zu diesem Gewinde korrespondierende Bohrung aufweist, so daß durch die Bohrung in das Gewinde eine Abschleppöse einschraubbar ist. Dadurch wird eine optimale Krafteinleitung auf den Rohbau bzw. das Anschlußteil des Fahrzeugs beim Abschleppen erreicht. Außerdem werden zusätzliche Elemente und Fertigungsschritte zur Realisierung einer Abschleppvorrichtung eingespart. Da das Gewinde für die Abschleppöse im Stülprohr liegt, hat es keine Auswirkung auf die Rohbaubeschädigung bei einem Unfall. Die Lage der Abschleppvorrichtung ist damit unerheblich.

Zweckmäßigerweise ist das Anschlußteil am Fahrzeug der Längsträger. Der Stoßfänger ist mit bekannten Maßnahmen am Querträger befestigt. Das Stützlager weist vorteilhafterweise abgerundete Kanten auf. Bei Hochgeschwindigkeitscrashs verhindern diese abgerundeten Kanten, daß der Querträger bei völlig deformiertem Stülprohr auf einer scharfen Kante zum Liegen kommt. Die Gefahr des Abreißens des Querträgers wird dadurch vermindert.

Weitere Merkmale der Erfindung ergeben sich aus den Unteransprüchen und der nachfolgenden Beschreibung eines Ausführungsbeispiels.

Es zeigen:
Figur 1 eine Draufsicht auf ein inneres Rohrteil mit Stützlager und Querträger,
Figur 2 eine Ansicht X von Figur 1 und
Figur 3 einen Schnitt A-A der Figur 2.

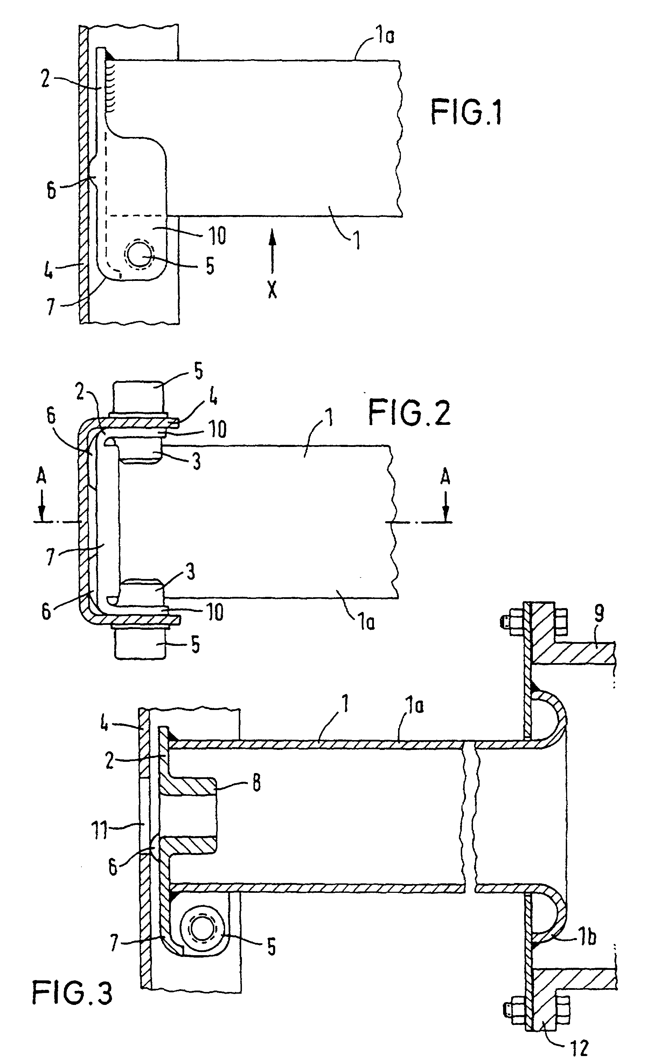

Die in den Figuren 1 - 3 dargestellte Vorrichtung zur Aufhängung eines Stoßfängers an einem Kraftfahrzeug zeigt einen Längsträger 9 eines ansonsten nicht gezeigten Fahrzeugs, an dem über einen Flansch 12 ein Stülprohr 1 befestigt ist. Das Stülprohr 1 besteht aus einem äußeren Rohrteil 1b, welches am Flansch 12 festliegt und aus einem inneren Rohrteil 1a. Bei einem Unfall, d.h. einer Krafteinwirkung auf das innere Rohrteil 1a schiebt sich dieses in das äußere Rohrteil 1b. Hierdurch wird die Aufprallenergie aufgefangen. An der Stirnseite des inneren Rohrteils 1a liegt ein Stützlager 2 auf, welches am inneren Rohrteil 1 a angeschweißt ist. Das Stützlager 2 ist U-förmig ausgebildet und weist Schenkel 10 auf. In diesen Schenkeln 10 ist ein Gewinde 3 angeordnet bzw. befestigt, über welches das Stützlager 2 auf einem Querträger 4 aufgeschraubt ist. Der Querträger 4 ist dabei ebenfalls U-förmig ausgebildet. Die Befestigung erfolgt über Schrauben 5.

Auf der Außenseite des Stützlagers 2 sind Verprägungen 6 in Form von Sicken angeordnet, mit denen das Stützlager 2 auf dem Querträger 4 aufliegt. Hierdurch kann der Querträger 4 auf dem Stützlager 2 geringe Verschiebungen durchführen.

Im Stützlager 2 ist ferner ein in das Innere des inneren Rohrteils 1a hineinreichendes Gewinde 8 angeordnet. Der Querträger 4 hat eine hierzu korrespondierende Bohrung 11 bzw. Öffnung, so daß in das Gewinde 8 eine Abschleppöse einschraubbar ist.

Damit bei einem Unfall der Querträger 4 nicht an den Kanten 7 des Stützlagers 2 abreißt, sind diese Kanten 7 abgerundet.

In den Figuren ist nicht gezeigt, daß am Querträger 4 ein Stoßfänger mit bekannten Mitteln befestigt ist.

## Patentansprüche

1. Vorrichtung zur Aufhängung eines Stoßfängers an einem Fahrzeug mit ein inneres (1a) und ein äußeres Rohrteil (1b) aufweisenden Stülprohren (1), die mit ihrem äußeren Rohrteil (1b) an einem Anschlußteil (9) des Fahrzeugs befestigt sind, wobei die inneren Rohrteile (1a) über Stützlager (2) mit einem Querträger (4) verbunden sind,
**dadurch gekennzeichnet**,
- **daß** die Stützlager (2) einerseits auf der Stirnseite der inneren Rohrteile (1a) aufliegen und andererseits über zumindest eine Verprägung (6) auf der Außenseite des Stützlagers (2) am Querträger (4) anliegen und
- **daß** die Stützlager (2) mit dem Querträger (4) verschraubt sind.

2. Vorrichtung nach Anspruch 1,
**dadurch gekennzeichnet, daß** das Stützlager (2) U-förmig geformt ist und in den Schenkeln (10) Bohrungen oder Gewinde (3) zur Verschraubung der mit dem Querträger (4) aufweist.

3. Vorrichtung nach Anspruch 1 oder 2,
**dadurch gekennzeichnet, daß** im Stützlager (2) ein in das Innere des inneren Rohrteils (1a) hineinreichendes Gewinde (8) angeordnet ist und der Querträger (4) eine zu diesem Gewinde (8) korrespondierende Bohrung (11) aufweist, so daß durch die Bohrung (11) in das Gewinde (8) eine Abschleppöse einschraubbar ist.

4. Vorrichtung nach einem der Ansprüche 1 bis 3,
**dadurch gekennzeichnet, daß** das Anschlußteil (9) am Fahrzeug der Längsträger ist.

5. Vorrichtung nach einem der Ansprüche 1 bis 4,
**dadurch gekennzeichnet, daß** der Stoßfänger am Querträger (4) befestigt ist.

6. Vorrichtung nach einem der Ansprüche 2 bis 5,
**dadurch gekennzeichnet, daß** das Stützlager (2) abgerundete Kanten (7) aufweist.

## Claims

1. Device for suspending a bumper on a vehicle, the device having turned-back tubes (1) that have an inner tube portion (1a) and an outer tube portion (1b) and which tubes (1) are secured by means of their outer tube portion (1b) to a connecting portion (9) of the vehicle, with the inner tube portions (1a) being connected by way of end supports (2) to a transverse carrier (4), **characterized**
- **in that** the end supports (2), on the one hand, are supported on the end face of the inner tube portions (1a) and, on the other hand, rest against the transverse carrier (4) by way of at least an embossing (6) on the outside of the end support (2), and
- **in that** the end supports (2) are screwed together with the transverse carrier (4).

2. Device according to claim 1, **characterized in that** the end support (2) is U-shaped and has, in the legs (10), bores or threads (3) for the purpose of being screwed together with the transverse carrier (4).

3. Device according to claim 1 or 2, **characterized in that** a thread (8) that reaches into the interior of the inner tube portion (1a) is arranged in the end support(2), and the transverse carrier (4) has a bore (11) that corresponds to this thread (8) so that a towing lug can be screwed into the thread (8) through the bore (11).

4. Device according to one of claims 1 to 3, **characterized in that** the connecting portion (9) on the vehicle is the longitudinal carrier.

5. Device according to one of claims 1 to 4, **characterized in that** the bumper is secured to the transverse carrier (4).

6. Device according to one of claims 2 to 5, **characterized in that** the end support (2) has rounded-off edges (7).

## Revendications

1. Dispositif de fixation d'un pare-chocs sur un véhicule, comprenant des tubes (1) à bords ourlés, qui comportent un tronçon de tube intérieur (la) et un tronçon de tube extérieur (1b) et sont fixés par leur tronçon de tube extérieur (1b) à un élément de raccordement (9) du véhicule, les tronçons de tube intérieur (la) étant reliés à une traverse (4) par l'intermédiaire de consoles-supports (2), **caractérisé en ce que** les consoles-supports (2), d'un côté reposent sur la face frontale des tronçons de tube intérieur (la), et de l'autre côté sont en appui sur la traverse (4) par l'intermédiaire d'au moins un bossage (6) prévu sur la face extérieure de la console-support (2), et **en ce que** les consoles-supports (2) sont vissées à la traverse (4).

2. Dispositif selon la revendication 1, **caractérisé en ce que** la console-support (2) est conformée en U et comporte, au niveau des branches (10) du U des trous ou des taraudages (3) pour le vissage à la traverse (4).

3. Dispositif selon la revendication 1 ou 2, **caractérisé en ce qu'**un filetage (8) qui s'étend à l'intérieur du tronçon de tube intérieur (la) est aménagé dans la console-support (2) et **en ce que** la traverse (4) présente un trou (11) qui coïncide avec ledit filetage (8), de telle sorte qu'un anneau de remorquage puisse être vissé à travers le trou (11) dans le filetage (8).

4. Dispositif selon une des revendications 1 à 3, **caractérisé en ce que** l'élément de raccordement (9) sur le véhicule est le longeron.

5. Dispositif selon une des revendications 1 à 4, **caractérisé en ce que** le pare-chocs est fixé à la traverse (4).

6. Dispositif selon une des revendications 2 à 5, **caractérisé en ce que** le support (2) présente des bords (7) arrondis.
